# EUROPEAN PATENT SPECIFICATION

(11) **EP 0 885 070 B1**
(45) Date of publication and mention of the grant of the patent: **30.05.2007**
(21) Application number: 96927942.1
(22) Date of filing: 28.08.1996
(51) Int. Cl.: B08B 15/00, B23K 37/04

(54) **VENTILATION TABLE**
ABSAUGTISCH
TABLE DE VENTILATION

(30) Priority: 29.08.1995 NL 1001079
(43) Date of publication of application: 23.12.1998
(73) Proprietor: Hauzer, Antonius Theodorus Cecilianus, 5301 NE Zaltbommel (NL)
(72) Inventor: Hauzer, Antonius Theodorus Cecilianus, 5301 NE Zaltbommel (NL)
(74) Representative: Hutter, Jacobus Johannes
(86) International application number: PCT/NL1996/000340
(87) International publication number: WO 1997/007903

(56) References cited:
- WO-A-94/21423
- GB-A- 1 596 381
- US-A- 3 769 097

## Description

The present invention refers to a ventilation table for the support of sheet metal products, which are to be cut with a thermal cutting machine, comprising: a box construction with a floor, walls and perhaps one or more partitions giving the table one or more compartments, means of fume extraction comprising: ducts connecting the compartments together for the transfer of fumes, dust, thermal energy etc. arising from cutting the sheet, at least one controllable variable aperture between the exhaust canal and the compartment, a ventilation system connected to an exhaust canal, of which at least one should be present, removable boxes on the floor of the table to collect the waste arising from the cutting process, comprising a floor and walls with suction slots in at least one of the walls, suction slots which communicate with the space in a compartment when the container is placed in the compartment, along with a removable top deck on top of the construction to support products during cutting operations.

GB 1,596,381 discloses a ventilation table in accordance with the preamble of claim 1.

In the metal processing industry ventilation tables of the aforementioned kind are used in different applications. The cutting installations used can for instance be an oxy-, plasma-cutting machine or any other type. In most cases the cutting installation will be designed with a moving bridge allowing the cutting apparatus to move backwards and forwards over the table and the steel plates it supports. The bridge is mostly also equipped with provisions to move the cutting apparatus athwart to this movement. In this way any combination of a forward and cross translation can be achieved.

When cutting sheet metal a considerable amount of fumes and melted metal, burning or not, is produced and forced away by the torch constituting a danger to any person in the vicinity as for instance in the oxy-cutting process. The ventilation tables according to the present state of the art are therefore besides for support of sheet metal which has to be cut also meant to capture the toxic fumes and to catch the waste arising from the cutting process. Containers within the compartments of the table are used to gather the waste. They can be removed at set intervals and emptied.

The present ventilation tables similar to the aforementioned type are merely suitable for cutting metal sheets up to a given thickness. This maximum thickness is set by the space between the cutting tool in top position and the surface of the top deck on the table.

Except for this limitation in the known tables it can also be stated that present ventilation tables are not suited to gather a larger amount of waste arising from the cutting of thicker metal plates satisfactorily. This is not merely due to the capacity of the waste containers. The heat contents of the waste increases significantly when thicker steel plates are cut. Due to the larger mass of waste material it is also impossible to remove the heat effectively. The containers can, when the heat in the waste is not extracted effectively, become so hot that intolerable deformations will occur. Furthermore, some of the waste might melt and stick to the floor of the container making it no longer possible to empty the containers in the normal way.

The invention intends to improve ventilation tables similar to the type described in the introduction in such a way that thick metal plates can also be cut. It can for one be characterised by the fact that the floor of the waste container is positioned at a certain distance above the floor of the table and that the distance between the waste container floor and the table floor, the placement and the dimensions the suction slots and passages, the shape of the waste container and ventilation compartment, the capacity of the ventilation system, the shape and dimensions of the ventilation canals, etc. are all tuned to each other in such a way, that an effective air flow around the waste container is guaranteed ensuring an effective cooling of the table during cutting operations.

Thanks to the effective cooling system around the waste container during cutting operations a ventilation table can be made to cope with considerably more glowing waste during the cutting process and thus to become suitable for use when thick metal plates are to be cut. By introducing a space between the waste container floor and the table floor it has been made possible to realise an excellent heat transfer from the heat container to the extracted air thus greatly improving the thermal management in the ventilation table in comparison to the thermal management in the ventilation tables build according to the known state of the art.

Another measure contributing to the improvement of the thermal management in the ventilation table and so the cooling of the waste containers is characterised by the fact that the walls of the waste containers are positioned at a certain distance away from the compartment walls so air can flow between the upright sides of the waste container and compartment during cutting operations, cooling the container walls effectively.

In this way a sufficient cooling of the container is maintained even when the built-up of waste in the container has reached a considerable height, avoiding deformations of the container.

Thanks to the fact that a ventilation table designed according to the invention has ventilation chambers all around the waste container, air can flow past the container walls and floor limiting the heat transfer through radiation, convection and conduction from the container walls to the cover plating of the table which in turn could lead to deformations, flaking of paint, etc.

The ventilation equipment used in combination with the ventilation tables should have sufficient, but also the smallest possible capacity. A smaller capacity demand for the ventilation equipment will namely also result in a smaller investment demand. It is therefore beneficial to ensure that no more air is extracted through the top deck of the ventilation table than strictly inevitable for a proper functioning of the table. It is therefore common use to provide the individual compartments with controllable ventilation openings, latches, to take care that these latches are only opened there where the actual cutting operation takes place and to ensure that the remaining latches are shut. In ventilation tables according to the present state of the art opening and shutting of the latches is achieved through a mechanical coupling between the moving bridge of the cutting machine and the table. In heavy duty cutting conditions a large amount of heat must be removed by the ventilation system, power consumption is large, it is therefore more pressing than ever to find means to limit the demand in ventilation capacity for a ventilation table according to the invention as much as possible. One embodiment of the invention advantageous to this respect, is characterised by the fact that each waste container is provided with a partition dividing the container into two equal parts that each compartment of the table is designed with a compartment partition dividing the compartment into two equal parts,

that the compartment partition runs into the floor and walls of the waste container present in the compartment, so that two equal compartment chambers are formed, physically separated and that each of the compartment chambers communicate with the exhaust canal via a controllable variable passage.

Occasionally a metal plate to be cut only covers half or less of a given waste container. In these cases, the particular compartment chamber under the plate can be ventilated by merely opening the latch to the exhaust canal belonging to that compartment chamber.

A very important embodiment of the invention is suitable for metal plates that are too thick for ventilation tables build according to the present state of the art and is characterised in the way that in the top half of the waste containers, a grating is integrated which is positioned below the level of the top deck. When the top deck is removed, the grating present will function as an auxiliary deck for the support of products which are too thick to fit between the top deck and the cutting torch.

Clearly in this embodiment of the invention there are, as it were, two decks positioned at different levels, the one below the other, the upper deck being formed by the top deck and the lower deck being formed by the collection of gratings in all the waste containers. To be able to use the lower deck it is necessary to remove the top deck first. This is no problem because each upper decks are always designed to be removable to allow the emptying of removable waste containers. By using this embodiment of the invention it is therefore possible to use one and the same ventilation table for metal plates varying widely in thickness. It is obvious that such a solution has major advantages over the alternative solution implying the use of an extra exhaust table, a larger cutting machine, more ventilation power, etc.

The last embodiment combines well with the embodiment mentioned just before. Together they form an advantageous new embodiment which is characterised by the fact that the partition in the waste container runs into the grating dividing each container into two physically separated container parts and in the fact that each of the container parts communicate with its corresponding chamber through its suction slots.

In this way the compartments as well as the waste containers are divided into two parts resulting in another contribution to the reduction in demand for ventilation power.

Another embodiment of the invention is particularly important to enable one to pour the contents freely out of the waste containers and is characterised by the fact that at least in two opposite walls of each waste container a part is designed to be slanting, by the fact that at least some of the slanting wall parts have slots, by the fact that the grating is mounted in these slots, and by the fact that the design of the slots guaranty an easy vertical removal of the grating.

Mounting the grating in this way facilitates the vertical removal of the aforementioned grating in their entirety out of the waste containers. When the grating is removed the contents of the waste containers can be emptied easily without anything obstructing the flow of waste.

When metal plates are to thick to fit between the torch in top position and the deck, the top deck should be removed. This is no problem at all, because ventilation tables under consideration are always equipped with a removable top deck in view of the demanded access to the waste containers, which for emptying, must be hoisted out of a table compartments. After the top deck is removed, the metal plate to be cut may be placed onto one or more gratings, depending on the dimensions of the metal plate. It will be clear that the weight of metal plates which are a lot heavier than in standard cases will have to be transferred to the waste container walls via the grating i.e. the auxiliary deck. In view of this it is possible to further improve an embodiment of the sort mentioned above by using the following embodiment of the invention which is characterised by the fact that the waste container is elongated, having long and short walls and that the support slots are designed within the longer box walls.

In choosing the long box walls and not the short ones there is space for more support slots. In this way the grating is supported by the waste container in a large number of spots, as to distribute the pressure exerted onto the container walls in the most attractive way.

It is known to be of importance to apply an embodiment which is characterised by the aimed in keeping the temperature of the polluted air extracted by the ventilation system below 100°C and preferably no higher than 90°C.

Application of this embodiment will, in spite of the production of extensive amounts of thermal energy, effectively avert the danger of excessive temperature rises in the ventilation system, which would cause the filter installation to malfunction or a dust explosion to occur.

As the waste containers for the ventilation table of the invention are loose entities which as such are available separately, the invention simultaneously extends to waste containers intended for use in ventilation tables according to the invention.

The invention will now be elucidated in more detail referring to the drawings in which:
Figure 1 is a perspective top view of a ventilation table according to the invention whereof, for the sake of clarity the top deck and a side panel of the table are partially cut away, and the waste container has been removed out of one of the compartments,
Figure 2 is a large-scale perspective view of a waste container according to the invention wherein part of the grating has been removed and
Figure 3 is a cross section presented in accordance with the arrows 33 in figure 1.

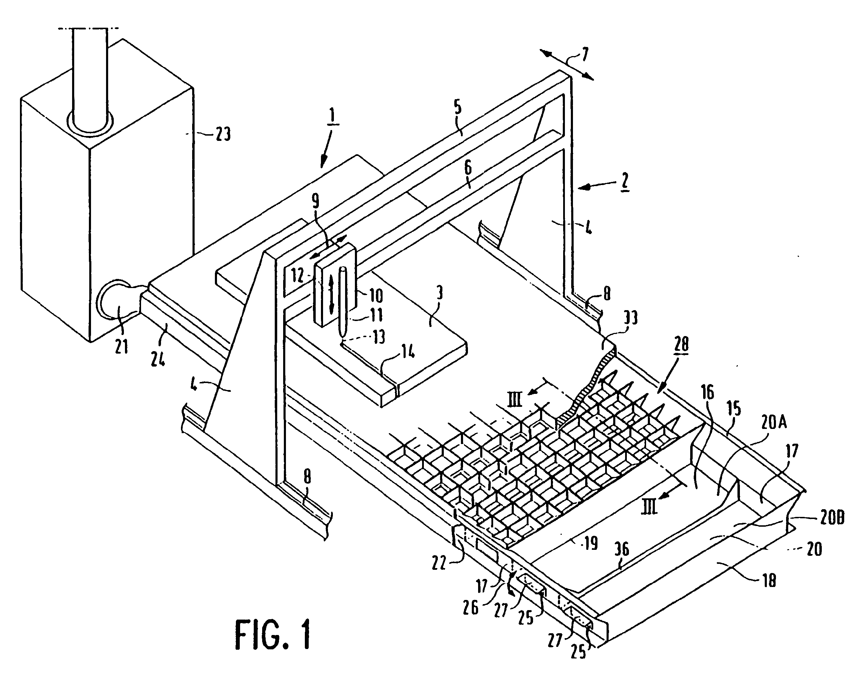

Figure 1 shows a ventilation table 1 supporting products 3 made of sheet metal, products which are to be cut with the aid of a thermal cutting installation 2. The figure is a mere schematic of the cutting installation. Aforementioned cutting installation comprises a bridge with vertical uprights 4 and horizontal beams 5 and 6. The whole can be moved in fine with arrow 7 back and forwards via two, only schematically drawn, guide-rails 8. Neither the cutting installation in itself, its power transmission or its means of guidance are of any importance with regards to the description of the invention, therefore these particular parts are only shown very schematically and the way they work will not be explained any further. A carrier 10 is attached to beam 6, movable in the direction indicated by the double arrow 9. Carrier 10 carries a cutting torch 11.
(shown very schematically) which in relation to the carrier can be moved up and down vertically as indicated by the double arrow 12. The cutting torch 10 is expected to be connected to a gas and/or electrical power supply, which, for simplicity is also not shown in the drawing. The cutting torch 11 introduces an immense amount of concentrated thermal energy into the plate 3, indicated by the dotted line 13, producing a cut 14 in the sheet.

Under the cutting installation a box-like construction 15 is drawn with its floor 16, long side walls 17 and short front and rear walls 18. In addition, there are a number of cross-walls 19, running parallel to the front and rear walls 18. In this way a number of compartments are created in the construction, one of which is indicated by reference number 20, the compartment walls of which are formed in this case by a cross wall 19 and the front wall 18.

The extracted gasses, dust, heat energy, etc. developed during production, are led trough an exhaust canal consisting of the parts 21. and 22., connected to compartments 20. Part 21 of the exhaust canal is formed by a more or less fixed or flexible exhaust pipe connected to a mechanical, electrically powered, ventilation unit, which is symbolically indicated by block 23.

The exhaust pipe 21 is connected to the rest of the exhaust canal 22 formed by the space present between panel 24 and one of the long side walls 17.

For simplicity only shown in the most right hand compartment 20 two variable passages 25 are installed per compartment between the compartment and part 22 of the exhaust canal. The size of the aperture of the passage can be adjusted. This is shown in the drawing only schematically in the form of a latch which can be opened or closed as indicated by the double arrow 26. The drawing does not show how said latch is powered. In most ventilation tables according to the present state of the art, the activation of latches 27 is achieved through a mechanical coupling between the table and the moving cutting bridge 2.A detailed description of the controls according to the present state of the art is of no extra relevance to the invention, so further details relating to these controls and the design of the valves, slides, etc. are not shown in the drawing, nor will they be discussed in more detail.

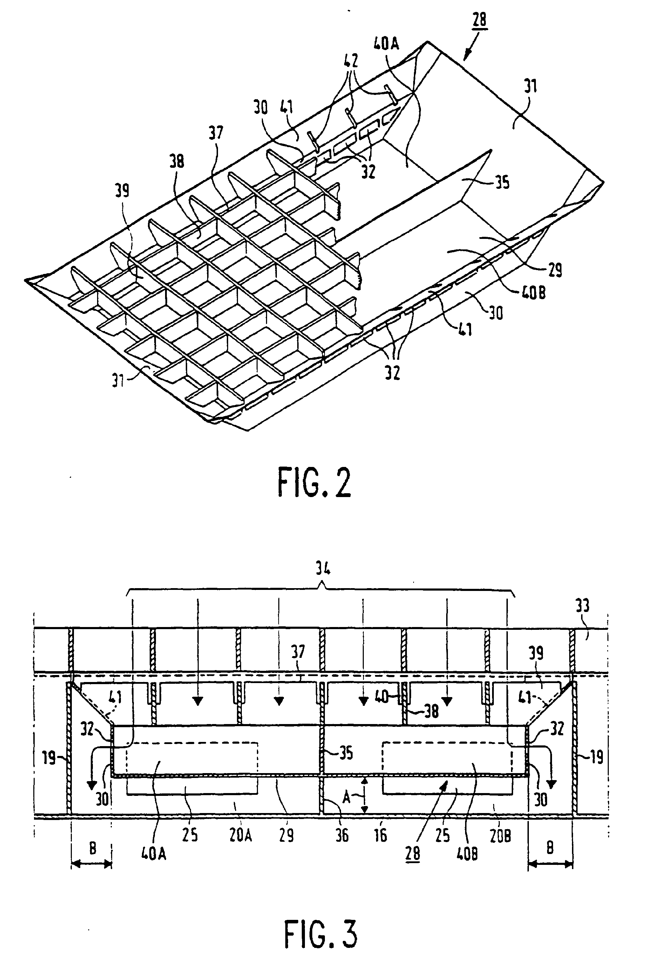

Waste containers are placed in the compartments. Figure 1. shows part of such a waste container, indicated by reference number 28. Figure 2. shows a close-up of a waste container.

The waste container is designed to gather cutting waste produced during cutting, not shown in the drawing. The waste containers comprise a container floor 29, long side walls and short end walls 30 and 31 respectively. The long side walls 30 have a number of elongated suction slots 32.

When the waste container is placed into table compartment 20 these suction slots 32, to be discussed in more detail later, communicate with the space between the container and the frame of the table.

The cover of the table construction 15, formed by a removable top deck 33, is made to carry products such as the metal plate 3 during cutting operations. This top deck is mainly a grating shown only schematically in the drawing, because this component of the ventilation table may have a standard design no other than one according to the present state of the art.

According to the invention, floor 29 of a waste container 28 is positioned at a distance above the floor 20 of the ventilation table 1.

Furthermore, the distance A between the container floor 29 and the table floor 20, the positioning and the dimensions of the suction slots 32 and the aperture of passage 25, the shape of the compartments 20 and the waste containers 28, the capacity of the ventilation equipment 23, the shape and dimensions of the exhaust ducts 21 and 22, etc. are tuned to one another in such a way to ensure an effective air flow underneath the container floor 29, resulting in an effective cooling of the container floor during cutting operations. Figure 3 shows symbolically, with the aid of arrows, the suction of air flowing through the top deck 33, into the waste container 28, through the suction slots 32 into compartment 20.

As shown quite clearly in figure 3, the long side walls 30 of each waste container 28, are positioned at a distance away from the compartment walls 19. As shown in figure 2, the short compartment walls 31 are designed to be slanting, to also form a space between the container end walls 31 and part of the construction walls 17 representing the short walls of a compartment 20. The container side walls 30 are set at a distance B away from the long compartment walls 19. Thanks to the large number of suction slots 32 in the container side walls 30 and the proper shape of relevant parts of the waste container and compartment, an excellent circulation of air is created in compartment 20 for cooling of both the walls 30 and 31 of the waste container and its floor 29.

Each waste container 28 is designed with a vertical partition 35 dividing the container into two mainly equal parts. Each compartment 20 of the table construction has a vertical partition 36 dividing the compartment into two equal chambers 20a and 20b.

Compartment partition 36 runs into the table floor and touches floor 29 of the waste container 28 present in the compartment creating two mainly separate chambers 20a and 20b. Each chamber 20a and 20b communicates with the exhaust canal 22 through a variable aperture 25.

A grating 37 can be integrated into the top part of the waste containers 28, consisting of long metal strips 38 and shorter metal strips 39 perpendicular to each other. As shown in figure 3 the long strips fit into slots 40 which are designed in mainly the top half of strip 39. In the same way strips 39 slide into similar slots mainly in the bottom half of the long strips 38.

If so desired, the strips may be joined permanently in an appropriate manner, such as through welding, turning the entire grate 37 into a rigid, fixed whole. Figure 3 also shows that the top side op the grating 37 is positioned below the level of the top deck 33. When the top deck 33 is removed, the grates 37 are set to form an auxiliary deck to support products too thick to be cut by aforementioned cutting installation 2 when laid down on the top deck. Not shown in the drawing is that for the support of products on the auxiliary deck formed by the grating 37, separate cast iron pines are used, which are placed on top of the strips of the grating, creating a certain distance between the bottom of a product or metal sheet to be cut and the grating. As such end-pieces belong to the present state of technology, they are not shown in the drawing and will not be discussed in more detail.

The container partition 35 in the middle runs into the long strip 38 in the middle of grate 37, please see figure 3 in particular, creating two mainly separated container sections 40a and 40b within the waste container 28. Each of the container sections 40a and 40b communicate with its corresponding chamber 20a and 20b respectively, through the relevant suction slots 32. If the cutting torch is positioned above only one of the two container sections 40a or 40b, only that section and its corresponding chamber 20a or 20b, is to be connected to exhaust canal 22 by opening passage 25. Supposing the left-hand passage 25 in figure 3 is opened and the righthand passage 25 is closed, then air will only be drawn in via the left-hand container section 40a and extracted through suction slots 32 and passage 25 in the inner wall of the table supporting one side of the container 31 and at the same time forming part of exhaust canal. In this way air intake via the right-hand passage 25 is avoided and cooling of the container is there where it's needed, which would otherwise result in a needless extra power demand by ventilation system 23. In addition, useless ventilation of container compartment 40b is avoided.

At least two opposite sides of the waste containers 28 have walls which are partly slanted. The embodiment shown in the figures has this feature on all four sides. The short end walls 31 are completely slanting, the long side walls 30 are designed with a slanting part 41. The slanting wall parts 41 allow the presence of support slots 42 with an open top, making it possible to drop the short strips 39 of grating 37 into place. The ends of strips 39 rest on the upright part of the long side walls 30.

The end of strips 39 sticking through slots 42, are chamfered to match the angle of the slanting part of wall 41 and the vertical parts of wall 30, in order to avoid any unnecessary obstruction of air flow within the chamber i.e. the space between the container walls and the compartment walls. These features are clearly indicated in figure 3 so there is no need for further explanation.

The waste containers 28 have an elongated shape with long side walls 30 and short end walls 31. The support slots 42 are advantageously positioned in the longer container walls. Thanks to the fact that the grating 37 has more short strips 39 than long strips 38, it is possible to create more slots by providing the longer side walls with support slots. Forces induced by heavy metal sheets which are placed on the grating, can thus be distributed over the wall of the container in the most attractive way.

In order to avoid problems with the ventilation system 23 precautions have been taken, possibly by using an automatic control system (not shown), to limit the temperature of the extracted polluted air through the table during operation to a maximum of 100°C and preferably a maximum of 90°C. The ventilation system 23 comprises dust filters which might ignite in case the temperature of the extracted air is too high. Dust explosions have already occurred in systems, where ventilation tables according to the present state of the art have been used, due to overheating. By combining a large number of measures among which the measures of the invention as discussed above, the ventilation table according to the invention ensures that the temperature of the extracted polluted air remains below the aforementioned prescribed temperature.

Although the invention is discussed with reference to merely one single embodiment, the invention is by no means limited thereto, but extends to all possible embodiments lying within the scope of the ventilation tables defined by the claims. For instance, the shape of the waste container is essentially immaterial, although it is certainly important that this shape is closely tuned to the requirements for a proper cooling of the container, and to avoid superfluous ventilation capacity. Furthermore, the waste containers can also be designed with other type of grating, grating for instance, comprising cast iron parts, tubes, etc.

## Claims

1. Ventilation table (1) to be used in combination with a thermal cutting installation for the support of products (3) to be cut out of sheet metal, comprising:
a box-like construction (15) with a construction floor (16) and construction walls (17, 18)
and comprising at least one compartment (20) bounded by the frame floor (16), compartment walls (17, 18, 19) and waste container (28),
ventilation means comprising:
at least one exhaust canal (21, 22) connected to the compartments (20) for the extraction of fumes, dust, thermal energy, etc. arising from the cutting of products,
at least one controllable variable aperture (25) per compartment (20) in between the exhaust canal (22) and the compartment,
a ventilation system (23) connected to at least one exhaust canal (21, 22),
one removable waste container (28) per compartment (20) to catch the waste arising from_the cutting process,
comprising a waste container floor (29) and container walls (30, 31)
**characterised in that** the waste container (28) is designed with suction slots (32) in at least one of the container walls (30), which-suction slots in the waste container (28) when placed inside a compartment (20) communicate with the space between the container and compartment walls and a removable top deck (33) on top of the construction (15) to support products during the cutting process,
**in that** the floor (29) of an installed waste container (28) is located at a given distance above the ventilation tables construction floor (20) and
**in that** the distance A between the waste container floor and the construction floor, the position and the dimensions of the suction slots (25) and the apertures (32), the shape of the compartment and of the waste container, the capacity of the ventilation system (23), the design and the sizes of the exhaust canals (21, 22), are tuned to one another in such a way, to achieve an effective air flow under the waste container floor (29) for an effective cooling of the container floor during the cutting process.

2. Ventilation table in accordance with claim 1, **characterised**
**in that** the container walls (30) of each waste container (28) are all placed at a given distance away from the surrounding compartment walls (17, 18, 19) and
**in that** during the cutting process an effective flow of air along the container walls (30, 31) is induced as well as, so also an effective cooling of the container walls is obtained.

3. Ventilation table in accordance with claim 1, **characterised**
**in that** every waste container (28) is designed with a container partition (35) dividing the container in two mainly equal parts,
**in that** each compartment (20) of the table frame is designed with a compartment partition (36) dividing the compartment in two mainly equal parts (20A, 20B),
**in that** the compartment partition (36) runs into the floor (29) of the waste container (28) present in the compartment dividing the compartment into two mainly separated compartment chambers (20A, 20B) and
**in that** each compartment chamber (20A, 20B) communicates with exhaust canal (22) through a controllable variable aperture (25).

4. Ventilation table in accordance with claim 1, **characterised**
**in that** a grating (37) can be integrated in the top part of the waste containers (28) in a plane below the top deck (33) and
**in that** when the top deck (33) is removed the grating (37) present can form an auxiliary deck to support products (3) which are to thick for cutting operations performed by the aforementioned cutting-installation (2) when the top deck is used for support.

5. Ventilation table according to claims 3 and 4. **characterised**in
that the waste container partition (35) runs into the grating (37) forming two mainly separated container sections (40A, 40B) and
in that each container section (40A, 408) communicates with its corresponding compartment chamber (20A, 20B) through suction slots (32).

6. Ventilation table according to claim 3, **characterised**
**in that** each waste container (28), at least when there are two sides opposite to one another, has walls with a slanting part (31, 41),
**in that** in least a number of these slanting wall parts (41) support slots (42) are present and
that the grating (37) can be removed vertically and is made to rest in these support slots (42).

7. Ventilation table according to claim 4, **characterised**
**in that** the waste container (28) has a elongated shape with long (30) and short walls (31) and
**in that** the support slots (42) are present in the longer waste container walls.

8. Ventilation table according to one or more of the previous claims, **characterised**
**in that** the ventilation table is arranged for limiting the temperature of the fumes extracted by the ventilation system (23), during operation to a maximum of 100°C and preferably a maximum of 90 °C.

9. Ventilation table according to claim 8, **characterised in that** an automatic control system is provided that is arranged for limiting the temperature of the extracted polluted air through the table during operation to a maximum of 100°C and preferably a maximum of 90°C.

## Patentansprüche

1. Lüftungstisch (1), verwendbar in Kombination mit einer thermischen Schneideinrichtung, zur Aufnahme von Gegenständen (3), die aus Blech geschnitten werden sollen, umfassend:
eine kubische Konstruktion (15) mit einem Konstruktionsboden (16) und Konstruktionswänden (17, 18), umfassend wenigstens ein Abteil (20), begrenzt durch den Abteilboden (16), Abteilwände (17, 18, 19) und Abfallcontainer (28),
Belüftungsvorrichtungen, umfassend:
wenigstens einen Abluftkanal (21, 22), verbunden mit den Abteilen 20 zur Abfuhr von Rauch, Dunst, Wärme usw., die beim Ausschneiden der Gegenstände entstehen,
wenigstens eine steuerbar veränderbare Öffnung (25) pro Abteil (20) zwischen dem Abluftkanal (22) und dem Abteil,
ein Lüftungssystem (23), verbunden mit wenigstens einem Abluftkanal (21, 22),
einen herausnehmbaren Abfallcontainer (28) pro Abteil (20), um den beim Schneidprozess anfallenden Abfall aufzufangen,
umfassend einen Abfallcontainerboden (29) und Containerwände (30, 31),
**dadurch gekennzeichnet, dass** der Abfallcontainer (28) mit Saugschlitzen (32) in wenigstens einem der Containerwände (30), welche Saugschlitze in dem Abfallcontainer (28), wenn dieser in einem Abteil (20) positioniert ist, mit dem Zwischenraum zwischen dem Container und den Abteilwänden kommunizieren, und mit einem abnehmbaren Deckel (33) oben auf der Konstruktion (15), der die Gegenstände während des Schneidprozesses trägt, ausgerüstet ist,
dass der Boden (29) eines installierten Abfallcontainers (28) in einer vorgegebenen Distanz oberhalb des Konstruktionsbodens (20) des Lüftungstisches installiert ist,
und dass der Abstand A zwischen dem Abfallcontainerboden und dem Konstruktionsboden, die Position und die Dimensionen der Saugschlitze (25) und die Öffnungen (32), die Form des Abteils und des Abfallcontainers, die Kapazität des Lüftungssystems (23), Aussehen und Größe der Abluftkanäle (21, 22) derart aufeinander abgestimmt sind, dass unter dem Abfallcontainerboden (29) eine wirksame Luftströmung erreicht wird, um den Containerboden während des Schneidprozesses wirksam zu kühlen.

2. Lüftungstisch nach Anspruch 1, **dadurch gekennzeichnet,**
**dass** die Containerwände (30) jedes Abfallcontainers (28) in einer vorgegebenen Distanz von den sie umgebendenden Abteilwänden (17, 18, 19) positioniert sind und
**dass** während des Schneidprozesses eine wirksame Luftströmung entlang der Containerwände (30, 31) induziert wird, so dass ebenso eine wirksame Kühlung der Containerwände erreicht wird.

3. Lüftungstisch nach Anspruch 1, **dadurch gekennzeichnet,**
**dass** jeder Abfallcontainer (28) mit einer Containerwand (35) ausgerüstet ist, die den Container in zwei etwa gleiche Teile unterteilt,
**dass** jedes Abteil (20) des Tischrahmens mit einer Abteiltrennwand (36) ausgerüstet ist, die das Abteil in zwei im Wesentlichen gleiche Teile (20A, 20B) unterteilt,
**dass** die Abteiltrennwand (36) bis zum Boden (29) des Abfallcontainers (28) reicht, wenn dieser im Abteil präsent ist, wobei das Abteil in zwei im Wesentlichen getrennte Abteilkammern (20A, 20B) unterteilt wird, und
**dass** jede Abteilkammer (20A, 20B) durch eine gesteuert veränderbare Öffnung (25) mit dem Abluftkanal (22) kommuniziert.

4. Lüftungstisch nach Anspruch 1, **dadurch gekennzeichnet,**
**dass** ein Gitter (37) in die Oberseite des Abfallcontainers in eine Ebene unterhalb des Deckels (30) integrierbar ist und
**dass**, wenn der Deckel (33) entfernt ist, das anwesende Gitter (37) ein Hilfsdeck bilden kann, um Gegenstände (3) zu tragen, welche für die Schneidoperation durch die vorerwähnte Schneidinstallation (2) zu dick sind, wenn der Deckel als Träger verwendet wird.

5. Lüftungstisch nach den Ansprüchen 3 und 4, **dadurch gekennzeichnet,**
**dass** die Abfallcontainertrennwand (35) bis zu dem Gitter (37) läuft und dabei zwei im Wesentlichen getrennte Containersektionen (40A, 40B) bildet und
**dass** jede Containersektion (40A, 40B) durch Saugschlitze (32) mit der korrespondierenden Abteilkammer (20A, 20B) kommuniziert.

6. Lüftungstisch nach Anspruch 3, **dadurch gekennzeichnet,**
**dass** jeder Abfallcontainer (28), wenigstens wenn zwei einander gegenüberliegende Seiten vorgesehen sind, Wände mit einem schrägen Abschnitt (31, 41) hat,
**dass** in wenigstens einer Anzahl dieser schrägen Wandabschnitte Stützschlitze (42) vorgesehen sind und
**dass** das Gitter (37) vertikal herausnehmbar und so ausgebildet ist, dass es in diesen Stützschlitzen (42) sitzt.

7. Lüftungstisch nach Anspruch 4, **dadurch gekennzeichnet,**
**dass** der Abfallcontainer (28) eine längliche Form hat mit langen (30) und kurzen (31) Wänden und
**dass** die Stützschlitze (42) in den längeren Abfallcontainerwänden vorgesehen sind.

8. Lüftungstisch nach einem oder mehreren der vorhergehenden Ansprüche, **dadurch gekennzeichnet,**
**dass** der Lüftungstisch so angeordnet ist, dass er die Temperatur des Rauchs, der durch das Lüftungssystem (23) abgezogen wird, während der Operation auf ein Maximum von 100° C und vorzugsweise ein Maximum von 90° C begrenzt.

9. Lüftungstisch nach Anspruch 8, **dadurch gekennzeichnet,**
**dass** ein automatisches Steuersystem vorgesehen ist, welches so angeordnet ist, dass es die Temperatur der durch den Tisch abgezogenen belasteten Luft während der Operation auf ein Maximum von 100° C und vorzugsweise ein Maximum von 90° C begrenzt.

## Revendications

1. Table de ventilation (1) à utiliser en association avec une installation de coupe par voie thermique pour le support de produits (3) à couper dans une tôle, comprenant
- une construction en forme de boîte (15) avec un fond de construction (16) et des parois de construction (17, 18) et comprenant au moins un compartiment (20) délimité par le fond de structure (16), les parois de compartiment (17, 18, 19) et un bac à déchets (28),
- un moyen de ventilation comprenant :
au moins un canal d'évacuation (21, 22) relié aux compartiments (20) pour l'extraction de fumées, de poussière, d'énergie thermique, etc. provenant du coupage de produits,
au moins une ouverture variable contrôlable (25) par compartiment (20) entre le canal d'évacuation (22) et le compartiment, et
un système de ventilation (23) relié à au moins un canal d'évacuation (21, 22), et
- un bac à déchets amovible (28) par compartiment (20) pour recueillir les déchets provenant du processus de coupe,
comprenant un fond de bac à déchets (29) et des parois de bac (30, 31),
**caractérisée en ce que**
le bac à déchets (28) comporte des fentes d'aspiration (32) dans au moins l'une des parois de bac (30) qui, lorsque le bac à déchets (28) est placé à l'intérieur d'un compartiment (20), communiquent avec l'espace situé entre les parois du bac et celles du compartiment, et un couvercle supérieur amovible (33) sur le dessus de la construction (15) pour supporter les produits pendant le processus de coupage,
le fond (29) d'un bac à déchets (28) installé est situé à une distance donnée au-dessus du fond de construction (20) de la table de ventilation, et
la distance A entre le fond du bac à déchets et le fond de la construction, la position et les dimensions des fentes d'aspiration (25) et des ouvertures (32), la forme du compartiment et du bac à déchets, la capacité du système de ventilation (23), la conception et les tailles des canaux d'évacuation (21, 22) sont réglées les unes par rapport aux autres pour réaliser sous le fond (29) du bac à déchets un écoulement d'air efficace pour un refroidissement efficace de ce dernier pendant le processus de coupe.

2. Table de ventilation selon la revendication 1,
**caractérisée en ce que**
les parois de bac (30) de chaque bac à déchets (28) sont toutes placées à une distance donnée des parois de compartiment environnantes (17, 18, 19), et
pendant le processus de coupe, un écoulement d'air efficace le long des parois de bac (30, 31) est également induit, pour avoir ainsi un refroidissement efficace des parois du bac.

3. Table de ventilation selon la revendication 1,
**caractérisée en ce que**
chaque bac à déchets (28) comporte une séparation de bac (35) divisant le bac en deux parties essentiellement égales,
chaque compartiment (20) de la structure de table comporte une séparation de compartiment (36) divisant le compartiment en deux parties essentiellement égales (20A, 20B),
la séparation de compartiment (36) est placée dans le fond (29) du bac à déchets (28) présent dans le compartiment, divisant ce dernier en deux chambres de compartiment essentiellement séparées (20A, 20B), et
chaque chambre de compartiment (20A, 20B) communique avec un canal d'évacuation (22) par le biais d'une ouverture variable contrôlable (25).

4. Table de ventilation selon la revendication 1,
**caractérisée en ce qu'**
une grille (37) peut être intégrée dans la partie supérieure des bacs à déchets (28) dans un plan situé sous le couvercle supérieur (33), et
lorsque le couvercle supérieur (33) est retiré, la grille (37) présente peut former un couvercle auxiliaire pour supporter des produits (3) trop épais pour les opérations de coupe réalisées par l'installation de coupe (2) précitée lorsque le couvercle supérieur est utilisé comme support.

5. Table de ventilation selon les revendications 3 et 4,
**caractérisée en ce que**
la séparation de bac à déchets (35) est placée dans la grille (37), formant deux sections de bac essentiellement séparées (40A, 40B), et
chaque section de bac (40A, 40B) communique avec sa chambre de compartiment (20A, 20B) correspondante par le biais des fentes d'aspiration (32).

6. Table de ventilation selon la revendication 3,
**caractérisée en ce que**
chaque bac à déchets (28), au moins lorsqu'il y a deux côtés opposés l'un à l'autre, possède des parois ayant une partie inclinée (31, 41),
des fentes de support (42) sont présentes dans au moins un certain nombre de ces parties de paroi inclinées (41), et
**en ce que** la grille (37) peut être retirée verticalement et est conçue pour reposer dans ces fentes de support (42).

7. Table de ventilation selon la revendication 4,
**caractérisée en ce que**
le bac à déchets (28) a une forme allongée avec des parois longues (30) et courtes (31), et
les fentes de support (42) sont présentes dans les parois plus longues du bac à déchets.

8. Table de ventilation selon une ou plusieurs des revendications précédentes,
**caractérisée en ce qu'**
la table de ventilation est prévue pour limiter la température des fumées extraites par le système de ventilation (23), pendant le fonctionnement à un maximum de 100 °C et de préférence à un maximum de 90 °C.

9. Table de ventilation selon la revendication 8,
**caractérisée en ce qu'**
un système de commande automatique est prévu pour limiter la température de l'air pollué extrait par la table pendant le fonctionnement à un maximum de 100 °C, de préférence à un maximum de 90 °C.
